# FASCICULE DE BREVET EUROPEEN

(11) **EP 2 926 610 B1**
(45) Date de publication et mention de la délivrance du brevet: **15.05.2019**
(21) Numéro de dépôt: 13795254.5
(22) Date de dépôt: 25.11.2013
(51) Int. Cl.: H04W 72/08, H04W 72/12

(54) **DISPOSITIF ET PROCÉDÉ DE CONFIGURATION D'UN DISPOSITIF DE COMMUNICATION**
VORRICHTUNG UND VERFAHREN ZUM KONFIGURIEREN EINER KOMMUNIKATIONSVORRICHTUNG
DEVICE AND METHOD FOR CONFIGURING A COMMUNICATION DEVICE

(30) Priorité: 30.11.2012 FR 1261463
(43) Date de publication de la demande: 07.10.2015
(73) Titulaire: SAGEMCOM BROADBAND SAS, 92500 Rueil Malmaison (FR)
(72) Inventeur: REUCHE, Anthony, F-92500 Rueil Malmaison (FR)
(74) Mandataire: Cabinet Le Guen Maillet
(86) Numéro de dépôt international: PCT/EP2013/074601
(87) Numéro de publication internationale: WO 2014/082956

(56) Documents cités:
- EP-A1- 2 367 397
- EP-A2- 2 207 395
- WO-A1-03/081925
- US-A1- 2008 112 340
- US-A1- 2012 058 728
- US-A1- 2012 252 510

## Description

La présente invention concerne la configuration d'un dispositif de communication destiné à être connecté à un réseau sans-fil comportant un nombre N de canaux de communication, avec N ≥ 2, le dispositif de communication étant adapté pour communiquer via un canal de communication à la fois.

Les dispositifs de communication radio sont, de par la multiplication du nombre de ce type de produits et de la variété de standards de communication qu'ils mettent en oeuvre, de plus en plus soumis à des perturbations radio dans leur propre plage fréquentielle d'utilisation. Les réseaux de communication interconnectant ces dispositifs de communication comportent généralement une pluralité de canaux de communication permettant de pallier notamment ce problème. En effet, des perturbations intervenants sur un canal de communication n'interviennent pas forcément sur un autre canal de communication. On parle alors de sélectivité fréquentielle, c'est-à-dire que des perturbations vont avoir plus ou moins d'impact sur les possibilités de communication en fonction de la bande, ou de la sous-bande fréquentielle, utilisée, US 2008/112340 A1 divulgue un coordinateur de réseau comportant des moyens de configuration dynamique adapté pour configurer un dispositif de communication destiné à être connecté à un réseau sans-fil comportant un nombre N de canaux de communication, avec N> 2. Le dispositif de configuration comportant des moyens de sélection d'un canal parmi les N canaux de communication, les moyens de sélection sont adaptés pour sélectionner le canal de communication le moins perturbé. WO 03/081925 A1 se rapporte généralement à la sélection des canaux de communication dans un système de communication, et plus particulièrement à un algorithme de sélection de canal dynamique dans un système de communication permettant de sélectionner un canal disponible pour l'utilisation entre les canaux disponibles.

De nombreuses technologies de communication reposent sur une utilisation d'un canal de communication à la fois. On peut citer par exemple les technologies DECT (« Digital Enhanced Cordless Telephone » en anglais), Zigbee (marque déposée) basé sur la norme IEEE 802.15.4, et Wi-Fi (marque déposée) basé sur la norme IEEE 802.11.

Pour pouvoir sélectionner un canal de communication, des mécanismes de sélection automatique de canal (« Automatic Channel Selection » en anglais) est mis en oeuvre. Une limitation apportée par les mécanismes connus de sélection automatique de canal est qu'ils reposent sur une analyse des perturbations qui se fait uniquement avant la sélection du canal de communication, alors que de nouvelles perturbations peuvent apparaître au fil du temps, par exemple suite à une activation d'un four micro-onde, à l'installation d'un système radio fréquence de technologie concurrente à proximité, etc. Ainsi le canal de communication initialement choisi peut s'avérer fournir des conditions de transmission non satisfaisantes au fil du temps.

Il est souhaitable de pallier ces inconvénients de l'état de la technique. Il est notamment souhaitable de fournir une solution qui permette de dynamiquement changé de canal de communication, tout en évitant des basculements intempestifs. En effet, chaque basculement de canal entraîne une reconfiguration des dispositifs de communication, ce qui peut nuire aux performances globales de communication.

L'invention concerne un dispositif de configuration adapté pour configurer un dispositif de communication destiné à être connecté à un réseau sans-fil comportant un nombre N de canaux de communication, avec N ≥ 2, le dispositif de communication comprenant un module de communication radiofréquence et étant adapté pour communiquer via un canal de communication à la fois, chaque communication du dispositif de communications utilisant ledit module de communication radiofréquence, le dispositif de configuration comportant des moyens de sélection d'un canal parmi les N canaux de communication. Les moyens de sélection sont adaptés pour : activer une temporisation T2 dont la durée est représentative d'une durée estimée de stabilité des conditions de transmission sur le canaux de transmission; sélectionner un canal de communication de niveau de perturbation inconnu, lorsque le niveau de perturbation d'au moins un canal de communication est inconnu du dispositif de configuration ; et sinon, sélectionner le canal de communication le moins perturbé. Le dispositif de configuration comporte des moyens pour maintenir un canal de communication sélectionné pendant une période prédéterminée T1 pour chaque communication du dispositif de communications; et des moyens pour analyser des perturbations sur le canal de communication sélectionné du dispositif de communication à expiration de la période prédéterminée Tl; le critère prédéterminé étant calculé à partir d'au moins une information fournie par les moyens pour analyser des perturbations; des moyens de configuration dynamique du dispositif de communication comprenant des moyens de réactivation des moyens de sélection, en cas de perturbations représentatives de conditions de transmission non satisfaisantes selon un critère prédéterminé sur le canal de communication sélectionné. Le dispositif de configuration comporte en outre des moyens de désactivation des moyens de configuration dynamique, lorsque les moyens de sélection ont été réactivés N fois et la temporisation T2 n'est pas écoulée. Ainsi, la configuration du dispositif de communication s'adapte à de nouvelles perturbations qui apparaissent au fil du temps, tout en évitant des basculements intempestifs de canaux de communication. En effet, une fois effectuées les N réactivations de sélection de canal de communication, tous les canaux de communication ont été balayés.

Selon un mode de réalisation particulier, les moyens de configuration dynamique comporte des moyens d'analyse de perturbations survenant sur le canal de communication sélectionné adaptés pour déterminer un type desdites perturbations, et ledit critère prédéterminé est fonction du type desdites perturbations. Ainsi, un changement de canal de communication est opéré de manière adaptée en fonction du type de perturbations.

Selon un mode de réalisation particulier, les moyens d'analyse sont adaptés pour déterminer au moins un type de perturbations parmi : un bruit bloquant, qui est de niveau supérieur à un premier seuil ; un bruit persistant, qui est présent au moins pendant une durée prédéfinie; un bruit fortement persistant, qui est présent au moins pendant une seconde durée prédéfinie supérieure à la première durée prédéfinie ; un bruit répétitif, qui est un bruit bloquant apparaissant une pluralité de fois pendant une période prédéfinie.

Selon un mode de réalisation particulier, les moyens d'analyse comporte : des moyens de découpage d'une période totale d'analyse en une pluralité de périodes unitaires ; des moyens d'activation d'un premier compteur, incrémenté à chaque fois que le niveau des perturbations dépasse un second seuil pendant une période unitaire. Les moyens d'analyse sont adaptés pour considérer les perturbations comme un bruit persistant lorsque le premier compteur est supérieur à un troisième seuil, une fois la période totale d'analyse écoulée. Ainsi, un bruit persistant est détecté de manière simple.

Selon un mode de réalisation, les moyens d'analyse sont adaptés pour considérer les perturbations comme un bruit fortement persistant lorsque le premier compteur est supérieur à un quatrième seuil, une fois la période totale d'analyse écoulée, ledit quatrième seuil étant supérieur audit troisième seuil. Ainsi, un bruit fortement persistant est détecté de manière simple.

Selon un mode de réalisation particulier, les moyens d'analyse comporte : des moyens de découpage d'une période totale d'analyse en une pluralité de sous-périodes d'analyse ; des moyens d'activation d'un second compteur, incrémenté à chaque fois qu'un type de perturbations prédéfini est détecté pendant une dite sous-période d'analyse. Les moyens d'analyse sont adaptés pour considérer les perturbations comme un bruit répétitif lorsque le second compteur est supérieur à un cinquième seuil, une fois la période totale d'analyse écoulée. Ainsi, un bruit répétitif est détecté de manière simple.

Selon un mode de réalisation particulier, le critère prédéterminé est de plus fonction d'un type d'application communiquant via le réseau sans-fil. Ainsi, un changement de canal de communication est opéré de manière adaptée en fonction des applications communiquant via le réseau sans-fil.

Selon un mode de réalisation particulier, le dispositif de configuration comporte des moyens d'analyse protocolaire de trames transitant par le dispositif de communication et des moyens de détermination du type d'application en fonction d'un résultat de l'analyse protocolaire. Ainsi, les dispositifs de communication disponibles sur étagère sont supportés.

Selon un mode de réalisation particulier, le dispositif de configuration est adapté pour suspendre les moyens de configuration dynamique, après chaque réactivation des moyens de sélection, jusqu'à expiration d'une durée estimée de stabilisation de reconfiguration de dispositifs de communication du réseau sans-fil suite à un changement de canal de communication. Ainsi, un changement de canal de communication n'est opéré que lorsque la configuration des dispositifs de communication du réseau sans-fil est stabilisée.

Selon un mode de réalisation particulier, le dispositif de configuration est inclus dans le dispositif de communication.

Selon un mode de réalisation particulier, le dispositif de communication est un point d'accès Wi-Fi (marque déposée). Ainsi, le dispositif de configuration opère d'éventuels changements de canal de communication en prenant en compte tous les chemins de données, ce qui ne serait pas le cas pour un autre dispositif de communication du réseau de communication Wi-Fi (marque déposée).

L'invention concerne également un procédé mis en oeuvre par un dispositif de configuration d'un dispositif de communication connecté à un réseau sans-fil comportant un nombre N de canaux de communication, avec N ≥ 2, le dispositif de communication comprenant un module de communication radiofréquence et étant adapté pour communiquer via un canal de communication à la fois, chaque communication du dispositif de communications utilisant ledit module de communication radiofréquence, le dispositif de configuration comportant des moyens de sélection d'un canal parmi les N canaux de communication. Les moyens de sélection sont adaptés pour : activer une temporisation T2 dont la durée est représentative d'une durée estimée de stabilité des conditions de transmission sur le canaux de transmission; sélectionner un canal de communication de niveau de perturbation inconnu, lorsque le niveau de perturbation d'au moins un canal de communication est inconnu du dispositif de configuration ; et sinon, sélectionner le canal de communication le moins perturbé. Le dispositif de configuration comporte des moyens pour maintenir un canal de communication sélectionné pendant une période prédéterminée T1 pour chaque communication du dispositif de communications; et des moyens pour analyser des perturbations sur le canal de communication sélectionné du dispositif de communication à expiration de la période prédéterminée Tl; le critère prédéterminé étant calculé à partir d'au moins une information fournie par les moyens pour analyser des perturbations; des moyens de configuration dynamique du dispositif de communication comprenant des moyens de réactivation des moyens de sélection, en cas de perturbations représentatives de conditions de transmission non satisfaisantes selon un critère prédéterminé sur le canal de communication sélectionné. Le procédé est tel qu'il comporte une étape de désactivation des moyens de configuration dynamique, lorsque les moyens de sélection ont été réactivés N fois et la temporisation T2 n'est pas écoulée.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 illustre schématiquement un système de communication sans-fil dans lequel la présente invention peut être mise en oeuvre ;
- la Fig. 2A illustre schématiquement un premier exemple d'architecture matérielle d'un dispositif de communication du système de communication sans-fil ;
- la Fig. 2B illustre schématiquement un second exemple d'architecture matérielle du dispositif de communication ;
- la Fig. 3 illustre schématiquement un algorithme de configuration du dispositif de communication en ce qui concerne la sélection d'un canal de communication ;
- la Fig. 4 illustre schématiquement un premier algorithme de détection de type de perturbations survenant sur le canal de communication sélectionné ;
- la Fig. 5 illustre schématiquement un second algorithme de détection de type de perturbations survenant sur le canal de communication sélectionné ;
- la Fig. 6A illustre schématiquement un premier algorithme de définition de besoins en conditions de transmission ;
- la Fig. 6B illustre schématiquement un second algorithme de définition de besoins en conditions de transmission.

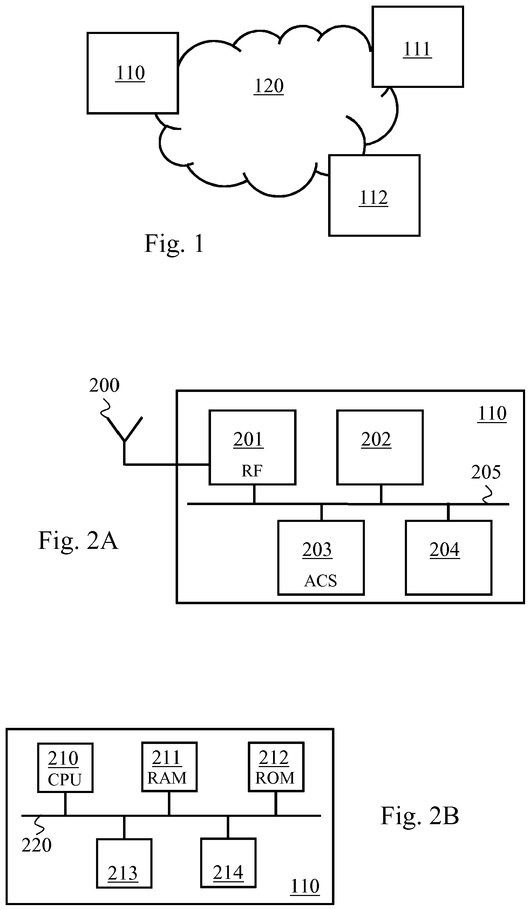

La Fig. 1 illustre schématiquement un système de communication dans lequel la présente invention peut être mise en oeuvre. Le système de communication comporte au moins deux dispositifs de communication 110, 111, 112 interconnectés par un réseau sans-fil 120.

Dans un mode de réalisation particulier, le réseau sans-fil 120 est un réseau local WLAN (« Wireless Local Area Network » en anglais), par exemple de type DECT, ou de type Zigbee (marque déposée). Préférentiellement, le réseau sans-fil 120 est de type Wi-Fi (marque déposée).

Le réseau sans-fil 120 comporte un nombre N de canaux de communication, avec N ≥ 2. Les dispositifs de communication 110, 111, 112 ne peuvent communiquer que via un canal de communication à la fois. Ainsi, lorsque les dispositifs de communication 110, 111, 112 sont configurés pour communiquer via un canal de communication parmi lesdits N canaux, les dispositifs de communication 110, 111, 112 n'ont pas connaissance de perturbations survenant sur tout autre canal de communication parmi lesdits N canaux.

Lorsque deux dispositifs de communication 110, 111 communiquent l'un avec l'autre, l'un d'eux est en charge de sélectionner un canal de communication parmi lesdits N canaux. Dans un mode préférentiel de réalisation, dans lequel un point d'accès ou une station de base est défini pour gérer le réseau sans-fil 120, le point d'accès ou la station de base est en charge sélectionner un même canal de communication pour tout le réseau sans-fil 120.

Considérons par la suite que le dispositif de communication 110 est en charge de sélectionner le canal de communication à utiliser dans tout le réseau sans-fil 120. Ainsi, le dispositif de communication 110 est préférentiellement un point d'accès Wi-Fi (marque déposée).

La Fig. 2A illustre schématiquement un premier exemple d'architecture matérielle du dispositif de communication 110. Le dispositif de communication 110 comporte alors une antenne 200 et, reliés par un bus de communication 205 : un module de communication radio fréquence RF 201 connecté à l'antenne 200, un module de traitement de données en bande de base 202, un module de sélection automatique de canal ACS 203 et un module de configuration 204 adapté pour configurer le dispositif de communication 110.

Le module de sélection automatique de canal ACS 203 est adapté pour recevoir les signaux en provenance du module de communication radio fréquence RF 201, pour distinguer les signaux répondant à la norme de communication en vigueur au sein du réseau sans-fil 120, *e.g.* Wi-Fi (marque déposée), des autres signaux dans la même bande fréquentielle, *i.e.* les signaux créant des perturbations. Sur cette base, le module de sélection automatique de canal ACS 203 est adapté pour sélectionner le canal de communication le moins perturbé parmi les N canaux de communication, à moins que le niveau de perturbation d'au moins un canal de communication ne soit pas connu du module de sélection automatique de canal ACS 203. Dans ce cas, le module de sélection automatique de canal ACS 203 sélectionne un canal de communication dont le niveau de perturbation n'est pas connu. Lorsque plusieurs canaux de communication sont de niveau de perturbation inconnu, le module de sélection automatique de canal ACS 203 peut effectuer une sélection arbitraire parmi ces canaux de communication, ou selon une séquence prédéfinie, ou en fonction d'un nombre de points d'accès détectés pour chacun de ces canaux de communication.

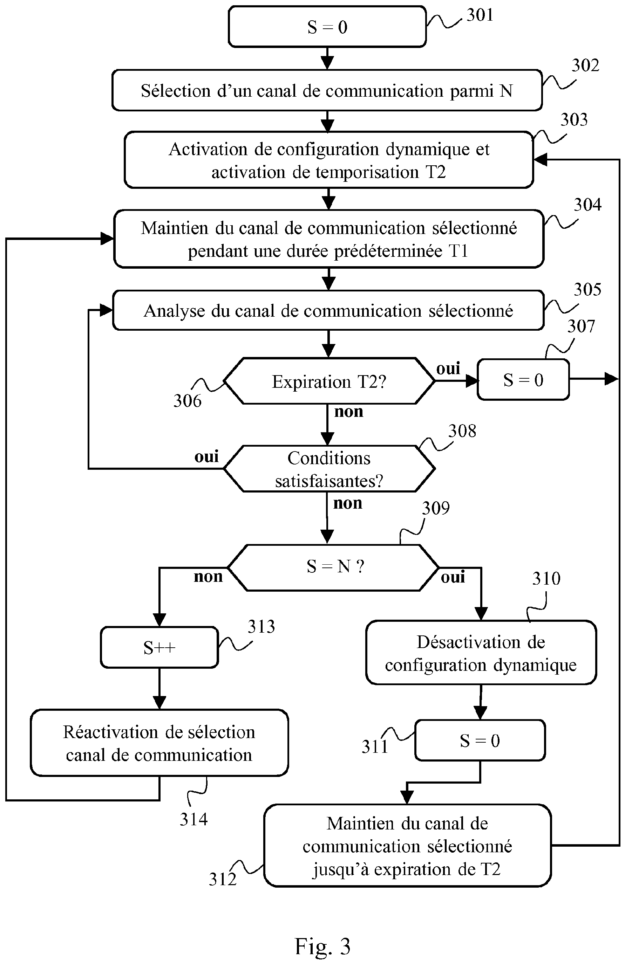

Le module de configuration 204 est en charge de détecter quand les conditions de communication sont remplies pour requérir une réactivation du module de sélection automatique de canal ACS 203. Le fonctionnement du module de configuration 204 est détaillé ci-après en relation avec les Figs. 3, 4, 5, 6A et 6B. Le module de configuration 204 peut déterminer le niveau des perturbations sur chaque canal de communication à partir de signaux reçus du module de communication radio fréquence RF 201, ou peut recevoir une information représentative dudit niveau des perturbations en provenance du module de sélection automatique de canal ACS 203.

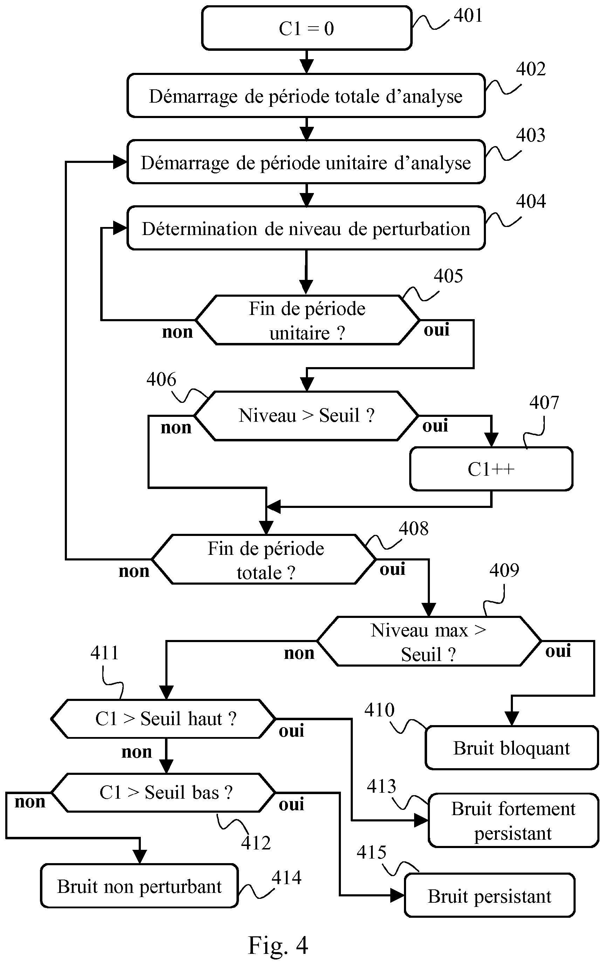

Dans un premier mode de réalisation, le module de sélection automatique de canal ACS 203 reçoit du module de configuration 204 des informations indiquant, pour chaque canal de communication parmi les N canaux de communication, si le niveau des perturbations est connu, et des informations représentatives de ce niveau des perturbations lorsqu'il est connu. Par exemple, le module de sélection automatique de canal ACS 203 reçoit du module de configuration 204 une valeur par défaut si le niveau des perturbations est inconnu, et sinon une valeur de compteur C1, tel que décrit ci-après avec en relation avec la Fig. 4. Toute autre valeur représentative du niveau des perturbations peut être utilisée. Le module de sélection automatique de canal ACS 203 effectue alors la sélection de canal de communication d'après les informations fournies par le module de configuration 204.

Dans un second mode de réalisation, le module de sélection automatique de canal ACS 203 analyse les signaux reçus via le module RF 201. Le module de sélection automatique de canal ACS 203 obtient de cette analyse des informations indiquant, pour chaque canal de communication parmi les N canaux de communication, si le niveau des perturbations est connu, et des informations représentatives de ce niveau des perturbations lorsqu'il est connu. Le module de sélection automatique de canal ACS 203 comporte alors une entrée permettant au module de configuration 204 de réinitialiser ces informations lors d'une désactivation de configuration dynamique, comme décrit ci-après en relation avec la Fig. 3.

La Fig. 2B illustre schématiquement un second exemple d'architecture matérielle du dispositif de communication 110. Le dispositif de communication 110 comporte alors, reliés par un bus de communication 220 : un processeur ou CPU (« Central Processing Unit » en anglais) 210 ; une mémoire vive RAM (« Random Access Memory » en anglais) 211 ; une mémoire morte ROM (« Read Only Memory » en anglais) 212 ; une unité de stockage ou un lecteur de support de stockage, tel qu'un lecteur de cartes SD (« Secure Digital » en anglais) 213 ; et une interface 214 permettant de communiquer via le réseau sans-fil 120.

Le processeur 210 est capable d'exécuter des instructions chargées dans la RAM 211 à partir de la ROM 212, d'une mémoire externe (non représentée), d'un support de stockage, ou d'un réseau de communication. Lorsque le dispositif de communication 110 est mis sous tension, le processeur 210 est capable de lire de la RAM 211 des instructions et de les exécuter. Ces instructions forment un programme d'ordinateur causant la mise en oeuvre, par le processeur 210, de tout ou partie des algorithmes et étapes décrits ci-après.

Ainsi, tout ou partie des algorithmes et étapes décrits ci-après peut être implémenté sous forme logicielle par exécution d'un ensemble d'instructions par une machine programmable, tel qu'un DSP (« Digital Signal Processor » en anglais) ou un microcontrôleur.

Tout ou partie des algorithmes et étapes décrits ci-après peut aussi être implémenté sous forme matérielle par une machine ou un composant dédié, tel qu'un FPGA (« Field-Programmable Gate Array » en anglais) ou un ASIC (« Application-Specific Integrated Circuit » en anglais). Une telle mise en oeuvre matérielle correspond par exemple à l'architecture déjà présentée en relation avec la Fig. 2A.

La Fig. 3 illustre schématiquement un algorithme de configuration du dispositif de communication 110 en ce qui concerne la sélection d'un canal de communication. L'algorithme est préférentiellement exécuté par le dispositif de communication 110, bien qu'il puisse être exécuté par un autre dispositif connecté au dispositif de communication 110. Considérons que l'algorithme est mis en oeuvre par le dispositif de communication 110.

Dans une étape 301, le dispositif de communication 110 met un paramètre S à 0. Le paramètre S est représentatif d'un nombre de fois où est réactivée la sélection d'un canal de communication parmi les N canaux de communication du réseau sans-fil 120.

Dans une étape 302 suivante, le dispositif de communication 110 sélectionne un canal de communication parmi les N canaux de communication du réseau sans-fil 120. En considérant l'architecture présentée à la Fig. 2A, le module de configuration 204 demande au module de sélection automatique de canal ACS 203 de sélectionner un canal de communication. A ce stade, aucune information n'est disponible pour sélectionner le canal de communication le moins perturbé. La sélection s'effectue donc de manière arbitraire, ou selon une séquence prédéfinie, ou en fonction d'un nombre de points d'accès détectés pour chacun de ces canaux de communication.

Dans une étape 303 suivante, le dispositif de communication 110 active un processus de configuration dynamique en ce qui concerne la sélection d'un canal de communication approprié. Le dispositif de communication 110 active aussi une temporisation T2 dont la durée est représentative d'une durée estimée de stabilité des conditions de transmission sur les N canaux de transmission.

Dans une étape 304 optionnelle suivante, le dispositif de communication 110 maintient le canal de communication sélectionné pendant une période de durée T1, par exemple égale à 1 minute. En d'autres termes, le dispositif de communication 110 suspend le processus de configuration dynamique jusqu'à expiration de la durée T1. T1 est une durée estimée de stabilisation de reconfiguration des dispositifs de communication 110, 111, 112 du réseau sans-fil 120 suite à un changement de canal de communication.

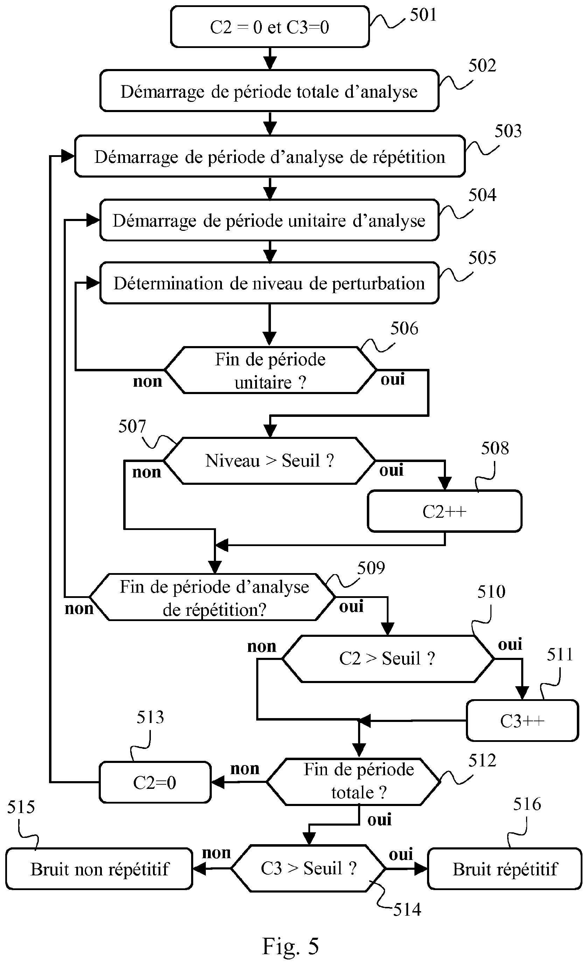

Dans une étape 305, le dispositif de communication 110 analyse les perturbations sur le canal de communication sélectionné. Des modes de réalisation de cette analyse sont présentés ci-après en relation avec les Figs. 4 et 5. L'étape 305 d'analyse peut être effectuée pendant ladite période de durée T1, ou après expiration de ladite période de durée T1, ou indépendamment de ladite période de durée T1.

Dans une étape 306 suivante, le dispositif de communication 110 détermine si la temporisation T2 activée à l'étape 303 est écoulée. Si tel est le cas, une étape 307 est effectuée ; sinon, une étape 308 est effectuée.

Dans l'étape 307, le dispositif de communication 110 remet à 0 le paramètre S. Ensuite, l'étape 303 est réitérée, où la temporisation T2 est réinitialisée et réactivée.

Dans l'étape 308, le dispositif de communication 110 détermine, en fonction de l'analyse des perturbations sur le canal de communication sélectionné, si les conditions de transmission sur le canal de communication sont satisfaisantes selon un critère prédéterminé.

Préférentiellement, le dispositif de communication 110 détermine pendant l'analyse au moins un type de perturbations survenant sur le canal de communication sélectionné, et ledit critère prédéterminé est fonction du type des perturbations observées.

Selon un mode de réalisation particulier, le critère prédéterminé est relatif au franchissement d'un premier seuil S1 par le niveau de perturbations pendant l'analyse. Cela correspond à un bruit, dit *bruit bloquant,* bloquant momentanément les transmissions sur le canal de transmission considéré. Les conditions de transmission sont alors considérées comme satisfaisantes si le premier seuil S1 n'est jamais franchi par le niveau de perturbations pendant l'analyse.

Selon un autre mode de réalisation particulier, le critère prédéterminé est relatif au franchissement pendant l'analyse d'un second seuil S2 par le niveau de perturbations et ce pendant une durée cumulée supérieure à un troisième seuil S3. Cela correspond à un bruit persistant, nuisant sur une période donnée à la bande passante du canal de communication sélectionné. Il convient de noter que le premier seuil S1 est supérieur, voire nettement supérieur, au second seuil S2. Le critère prédéterminé peut en outre être relatif au franchissement pendant l'analyse du second seuil S2 par le niveau de perturbations et ce pendant une durée cumulée supérieure à un quatrième seuil S4. Cela correspond à un bruit fortement persistant, nuisant sur une période donnée à la bande passante du canal de communication sélectionné. Il convient de noter que le quatrième seuil S4 est supérieur, voire nettement supérieur, au troisième seuil S3. La différence entre un bruit perturbant et un bruit fortement perturbant réside dans le fait qu'un bruit fortement perturbant réduit la bande passante disponible en dessous d'un niveau critique pour la transmission de données. Par exemple, un bruit persistant peut simplement nécessiter une adaptation de débit dans le cadre d'une transmission de flux adaptatif (« Adaptive Stream » en anglais), alors qu'un bruit fortement persistant peut nécessiter, dans la mesure du possible, un changement de canal de communication.

Selon un autre mode de réalisation particulier, le critère prédéterminé est relatif à un bruit répétitif, c'est-à-dire une pluralité d'occurrences d'un bruit donné, qu'il soit bloquant, persistant ou fortement persistant.

Selon encore un autre mode de réalisation particulier, le critère prédéterminé est relatif au franchissement d'un seuil maximum Smax par le niveau de perturbations pendant l'analyse. Cela correspond à un bruit qui bloque momentanément les transmissions sur les N canaux de transmission. Les conditions de transmission sont alors considérées comme satisfaisantes si le seuil Smax est franchi par le niveau de perturbations pendant l'analyse, étant donné que les perturbations ont eu un impact similaire sur l'ensemble des N canaux de communication.

Le dispositif de communication 110 est alors adapté pour détecter au moins un parmi ces types de perturbations pendant l'analyse effectuée à l'étape 305. Le critère prédéterminé peut alors définir que certains types de perturbations peuvent alors être acceptables, d'autres pas. Par exemple, une détection de perturbations de type bruit répétitif ou bruit persistant ou bruit fortement persistant peut devoir entraîner une réactivation du module de sélection automatique de canal ACS 203, contrairement à une détection de perturbations de type bruit bloquant.

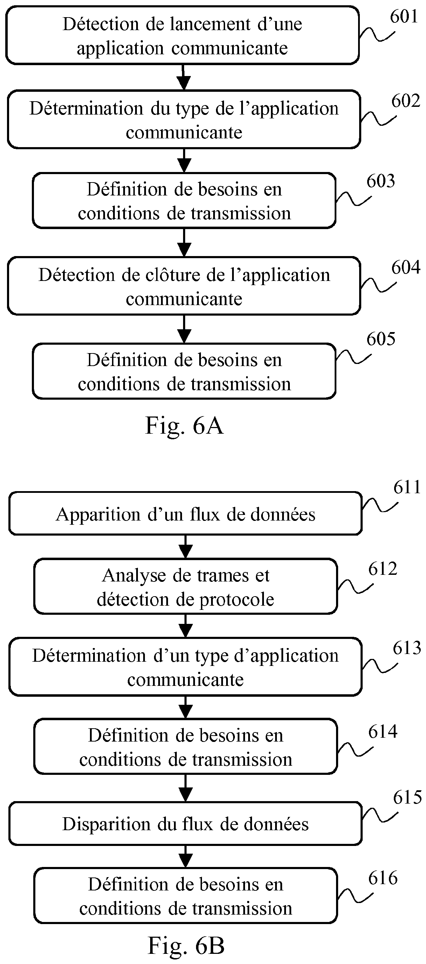

Selon encore un autre mode de réalisation particulier, le critère prédéterminé est de plus fonction d'au moins une application communiquant via le réseau sans-fil 120. Certains types de perturbations peuvent alors être acceptables, d'autres pas, en fonction de l'application ou des applications communiquant via le réseau sans-fil 120. Par exemple, pour une application de diffusion en mode continu (« streaming » en anglais) d'un contenu audio, un bruit persistant peut être acceptable mais pas un bruit répétitif ni un bruit fortement persistant, alors que dans le cas d'une application de diffusion en mode continu d'un contenu vidéo, un bruit persistant ou fortement persistant peut ne pas être acceptable. Cet aspect est détaillé ci-après en relation avec les Figs. 6A et 6B.

Si les conditions de transmission sont satisfaisantes, l'étape 305 est réitérée ; sinon, une étape 309 est effectuée.

Dans l'étape 309, le dispositif de communication 110 détermine si le paramètre S est égal au nombre N de canaux de communication. Si tel est le cas, une étape 310 est effectuée ; sinon, une étape 313 est effectuée.

Dans l'étape 313, le dispositif de communication 110 incrémente le paramètre S d'une unité.

Dans une étape 314 suivante, le dispositif de communication 110 réactive la sélection d'un canal de communication parmi les N canaux de communication du réseau sans-fil 120. En considérant l'architecture présentée à la Fig. 2A, le module de configuration 204 réactive le module de sélection automatique de canal ACS 203. Tant que le niveau de perturbation d'au moins un canal de communication n'est pas connu du dispositif de communication 110, un canal de communication dont le niveau de perturbation n'est pas connu est sélectionné ; dans ce cas, S < N. Sinon, le canal de communication le moins perturbé est sélectionné ; dans ce cas, S = N. Ensuite, l'étape 304 est réitérée avec le canal de communication sélectionné à l'étape 314. Dans une variante de réalisation, dans le cas où S = N à l'issue de l'étape 314, l'étape 310 peut être effectuée.

Dans l'étape 310, le dispositif de communication 110 désactive le processus de configuration dynamique. Chaque paramètre servant à stocker le niveau de perturbation des N canaux de communication est alors réinitialisé.

Dans une étape 311 suivante, le dispositif de communication 110 remet à 0 le paramètre S. Toute information relative à des niveaux des perturbations observées pendant l'étape d'analyse 305 est aussi réinitialisée.

Dans une étape 312 suivante, le dispositif de communication 110 maintient le canal de communication sélectionné jusqu'à expiration de la temporisation T2. La durée de la temporisation T2 étant représentative du temps estimé de stabilité des conditions de transmission, et étant donné que tous les N canaux de communication ont été observés et que le moins perturbé a été sélectionné, il est avantageux en termes de consommation de ressources et d'efficacité du système de communication sans-fil de ne réactiver le processus de configuration dynamique qu'à l'expiration de la temporisation T2. Cela permet d'assurer la convergence de la sélection d'un canal de transmission, en évitant un basculement continuel d'un canal à l'autre en cas de perturbations généralisées sur l'ensemble des N canaux de communication. Ensuite, l'étape 303 est réitérée.

Dans une variante de réalisation, lorsque les conditions de transmission sont jugées satisfaisantes à l'étape 308, l'étape 310 est effectuée. Il est alors considéré que le canal est stable jusqu'à expiration de la temporisation T2 et que les conditions de transmission restent satisfaisantes jusqu'à expiration de la temporisation T2.

La Fig. 4 illustre schématiquement un premier algorithme de détection de type de perturbations survenant sur le canal de communication sélectionné, lors de l'exécution de l'étape 305. L'algorithme est préférentiellement exécuté par le dispositif de communication 110, bien qu'il puisse être exécuté par un autre dispositif connecté au dispositif de communication 110. Considérons que l'algorithme est mis en oeuvre par le dispositif de communication 110.

Dans une étape 401, le dispositif de communication 110 met un compteur C1 à 0. Dans une étape 402 suivante, le dispositif de communication 110 démarre une période totale d'analyse. Dans une étape 403 suivante, le dispositif de communication 110 démarre une période unitaire d'analyse, la durée de ladite période totale étant un multiple prédéfini de la durée de ladite période unitaire.

Dans une étape 404 suivante, le dispositif de communication 110 observe le niveau de perturbation sur le canal sélectionné.

Dans une étape 405 suivante, le dispositif de communication 110 détermine si la période unitaire démarrée à l'étape 403 est écoulée ; si tel est le cas, une étape 406 est effectuée ; sinon, l'étape 404 est réitérée.

Dans l'étape 406, le dispositif de communication 110 détermine si le niveau de perturbations observé est supérieur au second seuil S2 déjà mentionné. Si tel est le cas, une étape 407 est effectuée ; sinon, une étape 408 est effectuée.

Dans l'étape 407, le dispositif de communication 110 incrémente le compteur C1 d'une unité, puis l'étape 408 est effectuée. Le compteur C1 indique donc un nombre de périodes unitaires pendant lesquelles un niveau de perturbations supérieur au seuil S2 est détecté. Au vu du nombre de périodes unitaires dans la période totale d'analyse, le compteur C1 est alors représentatif d'un taux temporel de perturbations, au delà du seuil S2, pendant la période totale d'analyse.

Dans l'étape 408, le dispositif de communication 110 détermine si la période totale d'analyse démarrée à l'étape 402 est écoulée. Si tel est le cas, une étape 409 est effectuée ; sinon, une nouvelle période unitaire d'analyse est démarrée par réitération de l'étape 403.

Dans l'étape 409, le dispositif de communication 110 détermine si, pendant la période totale d'analyse écoulée, le niveau maximum de perturbations observé est supérieur au premier seuil S1 déjà mentionné. Si tel est le cas, une étape 410 est effectuée ; sinon, une étape 411 est effectuée.

Dans l'étape 410, le dispositif de communication 110 considère que le niveau de perturbations observé pendant la période totale d'analyse écoulée est représentatif d'un bruit bloquant.

Dans l'étape 411, le dispositif de communication 110 détermine si le compteur C1 est supérieur au quatrième seuil S4 déjà mentionné. Si tel est le cas, une étape 413 est effectuée ; sinon, une étape 412 est effectuée.

Dans l'étape 412, le dispositif de communication 110 détermine si le compteur C1 est supérieur au troisième seuil S3 déjà mentionné. Si tel est le cas, une étape 415 est effectuée ; sinon, une étape 414 est effectuée. Le seuil S4 étant supérieur au seuil S3, ils sont respectivement notés *seuil haut* et *seuil bas* sur la Fig. 4.

Dans l'étape 413, le dispositif de communication 110 considère que le niveau de perturbations observé pendant la période totale d'analyse écoulée est représentatif d'un bruit fortement persistant.

Dans l'étape 414, le dispositif de communication 110 considère que le niveau de perturbations observé pendant la période totale d'analyse écoulée n'est pas représentatif d'un bruit perturbant.

Dans l'étape 415, le dispositif de communication 110 considère que le niveau de perturbations observé pendant la période totale d'analyse écoulée est représentatif d'un bruit persistant.

En d'autres termes, afin de détecter la présence d'un bruit persistant ou d'un bruit fortement persistant, le dispositif de communication 110 effectue un découpage de la période totale d'analyse en une pluralité de périodes unitaires d'analyse et observe ensuite le niveau des perturbations survenant sur le canal de communication sélectionné. Le dispositif de communication 110 active le compteur C1, qui est incrémenté à chaque fois que le niveau des perturbations dépasse le seuil S2 pendant une période unitaire, et considère les perturbations comme un bruit persistant lorsque la valeur du compteur C1 est supérieure au seuil S3, une fois la période totale d'analyse écoulée, et comme un bruit fortement persistant lorsque la valeur du compteur C1 est supérieure au seuil S4, une fois la période totale d'analyse écoulée.

L'algorithme de la Fig. 4 permet au dispositif de communication 110 de détecter la présence de bruit persistant et/ou de bruit fortement persistant et/ou de bruit bloquant pendant l'étape 305. Le dispositif de communication 110 peut aussi distinguer les perturbations liées à un bruit répétitif des perturbations isolées ; un exemple de mise en oeuvre est détaillé ci-après en relation avec la Fig. 5. Ainsi, le dispositif de communication 110 peut déterminer si les conditions de transmission sont satisfaisantes en fonction du type de perturbations détecté.

La Fig. 5 illustre schématiquement un second algorithme de détection de type de perturbations survenant sur le canal de communication sélectionné, visant à déterminer le caractère répétitif ou non d'un bruit. L'algorithme est préférentiellement exécuté par le dispositif de communication 110, bien qu'il puisse être exécuté par un autre dispositif connecté au dispositif de communication 110. Considérons que l'algorithme est mis en oeuvre par le dispositif de communication 110.

Dans une étape 501, le dispositif de communication 110 met un compteur C2 à 0 et met un compteur C3 à 0. Dans une étape 502 suivante, le dispositif de communication 110 démarre la période totale d'analyse. Dans une étape 503 suivante, le dispositif de communication 110 démarre une période d'analyse de répétition. Dans une étape 504 suivante, le dispositif de communication 110 démarre une période unitaire d'analyse. La durée de ladite période totale étant un multiple prédéfini de la durée de ladite période unitaire et un multiple prédéfini de la période d'analyse de répétition. Chaque période d'analyse de répétition peut alors être considérée comme une sous-période de la période totale d'analyse. La durée de chaque période d'analyse de répétition est aussi un multiple prédéfini de ladite période unitaire.

Dans une étape 505 suivante, le dispositif de communication 110 observe le niveau des perturbations sur le canal sélectionné.

Dans une étape 506 suivante, le dispositif de communication 110 détermine si la période unitaire démarrée à l'étape 503 est écoulée ; si tel est le cas, une étape 507 est effectuée ; sinon, l'étape 505 est réitérée.

Dans l'étape 507, le dispositif de communication 110 détermine si le niveau des perturbations observé est supérieur au second seuil S2 déjà mentionné. Si tel est le cas, une étape 508 est effectuée ; sinon, une étape 509 est effectuée.

Dans l'étape 508, le dispositif de communication 110 incrémente le compteur C2 d'une unité, puis l'étape 509 est effectuée. Le compteur C2 indique donc un nombre de périodes unitaires pendant lesquelles un niveau de perturbations supérieur au seuil S2 est détecté pendant la période d'analyse de répétition courante.

Dans l'étape 509, le dispositif de communication 110 détermine si la période d'analyse de répétition démarrée à l'étape 503 est écoulée. Si tel est le cas, une étape 510 est effectuée ; sinon, une nouvelle période unitaire d'analyse est démarrée par réitération de l'étape 504.

Dans l'étape 510, le dispositif de communication 110 détermine si le compteur C2 est supérieur au troisième seuil S3 pour détecter un bruit persistant répétitif, ou au quatrième seuil S4 pour détecter un bruit fortement persistant répétitif. Si tel est le cas, une étape 511 est effectuée ; sinon, une étape 512 est effectuée.

Dans l'étape 511, le dispositif de communication 110 incrémente le compteur C3 d'une unité, puis l'étape 512 est effectuée. Le compteur C3 est alors représentatif d'un nombre de périodes d'analyse de répétition pendant lesquelles est présent un bruit persistant, ou un bruit fortement persistant selon le cas considéré. Puis, l'étape 512 est effectuée.

Dans l'étape 512, le dispositif de communication 110 détermine si la période totale d'analyse démarrée à l'étape 502 est écoulée. Si tel est le cas, une étape 514 est effectuée ; sinon, une étape 513 est effectuée.

Dans l'étape 513, le dispositif de communication 110 réinitialise le compteur C2 à 0, afin de repartir pour une nouvelle période d'analyse de répétition en réitérant l'étape 503.

Dans l'étape 514, le dispositif de communication 110 détermine si le compteur C3 est supérieur à un cinquième seuil S5. Si tel est le cas, une étape 515 est effectuée ; sinon, une étape 516 est effectuée.

Dans l'étape 515, le dispositif de communication 110 considère que le niveau de perturbations observé pendant la période totale d'analyse écoulée n'est pas représentatif d'un bruit répétitif.

Dans l'étape 516, le dispositif de communication 110 considère que le niveau de perturbations observé pendant la période totale d'analyse écoulée est représentatif d'un bruit persistant répétitif, ou d'un bruit fortement persistant répétitif selon le cas considéré.

En d'autres termes, afin de détecter la présence d'un bruit répétitif, le dispositif de communication 110 effectue un découpage de la période totale d'analyse en une pluralité de périodes unitaires d'analyse et observe ensuite le niveau des perturbations survenant sur le canal de communication sélectionné. Le dispositif de communication 110 active le compteur C3, qui est incrémenté à chaque fois qu'un type de bruit persistant ou fortement persistant est détecté pendant une période d'analyse de répétition, et considère les perturbations comme un bruit répétitif lorsque la valeur du compteur C3 est supérieure au seuil S5, une fois la période totale d'analyse écoulée.

L'algorithme de la Fig. 5 est donc adapté à la détection d'un bruit persistant, ou fortement persistant, répétitif. Le même principe est applicable à la détection d'un bruit bloquant répétitif en comparant à l'étape 507 le niveau des perturbations maximum observé au premier seuil S1 déjà mentionné. Si le niveau des perturbations maximum observé est supérieur au premier seuil S1, une occurrence de bruit bloquant est détectée et le compteur C3 est incrémenté d'une unité. Le dispositif de communication 110 passe alors de l'étape 507 directement à l'étape 511 ; sinon, le dispositif de communication 110 passe alors de l'étape 507 directement à l'étape 512. En d'autres termes, le compteur C2 n'est pas utilisé.

La Fig. 6A illustre schématiquement un premier algorithme de définition de besoins en conditions de transmission. Cet algorithme s'applique plus particulièrement dans le cas où le dispositif de communication 110 met en oeuvre des applications communiquant via le réseau sans-fil 120 avec d'autres applications mises en oeuvre par les dispositifs de communication 111, 112.

Dans une étape 601, le dispositif de communication 110 détecte un lancement d'une application adaptée pour communiquer via le réseau sans-fil 120. Par exemple, le dispositif de communication 110 détecte un événement interne indiquant que l'application a été lancée sur le dispositif de communication 110, ou le dispositif de communication 110 reçoit un message via le réseau sans-fil 120 indiquant que l'application a été lancée sur un autre dispositif de communication 111, 112.

Dans une étape 602 suivante, le dispositif de communication 110 détermine un type de l'application. Par exemple, le dispositif de communication 110 détermine si l'application repose sur une transmission en mode continu (« streaming » en anglais) de contenu vidéo, ou une transmission en mode continu de contenu audio, ou sur un autre genre de transmission via le réseau sans-fil 120. Le type de l'application peut être déterminé grâce à un identifiant d'application, tel qu'un nom d'application, obtenu par le dispositif de communication 110 au lancement de l'application.

Dans une étape 603 suivante, le dispositif de communication 110 définit les besoins en conditions de transmission, tels qu'utilisés dans l'étape 308, en fonction du type déterminé de l'application. Le dispositif de communication 110 tient alors compte du fait que l'application, de type tel que déterminé, a été lancée. Par exemple, jusqu'alors aucune application de diffusion de contenu vidéo en mode continu n'utilisait les services du réseau sans-fil 120.

Dans une étape 604 suivante, le dispositif de communication 110 détecte la clôture de l'application. Par exemple, le dispositif de communication 110 détecte un événement interne indiquant que l'application a été clôturée sur le dispositif de communication 110, ou le dispositif de communication 110 reçoit un message via le réseau sans-fil 120 indiquant que l'application a été clôturée sur un autre dispositif de communication 111, 112.

Dans une étape 605 suivante, le dispositif de communication 110 définit les besoins en conditions de transmission, tels qu'utilisés dans l'étape 308, en fonction du type déterminé de l'application. Le dispositif de communication 110 tient compte du fait que l'application, de type tel que déterminé, a été clôturée. Par exemple, dorénavant aucune application de diffusion de contenu vidéo en mode continu n'utilise les services du réseau sans-fil 120.

La Fig. 6B illustre schématiquement un second algorithme de définition de besoins en conditions de transmission. Cet algorithme s'applique plus particulièrement dans le cas où le dispositif de communication 110 est un point d'accès gérant le réseau sans-fil 120.

Dans une étape 611, le dispositif de communication 110 détecte une apparition d'un flux de données transitant via le réseau sans-fil 120. Par exemple, le dispositif de communication 110 détecte un événement interne indiquant qu'un tel flux de données est généré, est reçu, ou transite par le dispositif de communication 110, ou le dispositif de communication 110 reçoit un message via le réseau sans-fil 120 indiquant qu'un tel flux de données est généré, est reçu, ou transite par un autre dispositif de communication 111, 112. Des trames du flux de données sont obtenues par le dispositif de communication 110 pour en effectuer une analyse protocolaire.

Dans une étape 612 suivante, le dispositif de communication 110 effectue l'analyse protocolaire du contenu de trames du flux de données, et détermine un protocole de communication mis en oeuvre pour la transmission de ces trames. Par exemple, le dispositif de communication 110 détermine que le protocole TCP (« Transmission Control Protocol » en anglais, tel que défini dans le document normatif RFC 793) ou que le protocole UDP (« User Datagram Protocol » en anglais, tel que défini dans le document normatif RFC 768) ou que le protocole RTP (« Real-time Transport Protocol » en anglais, tel que défini dans le document normatif RFC 3550) est utilisé.

Dans une étape 613 suivante, le dispositif de communication 110 détermine un type d'application auquel le flux de données correspond, en fonction du résultat de l'analyse protocolaire. Par exemple, en cas de mise en oeuvre du protocole RTP, le dispositif de communication 110 est capable de distinguer une transmission en mode continu (« streaming » en anglais) de contenu vidéo d'une transmission en mode continu de contenu audio grâce au champ PT (« Payload Type » en anglais) de l'entête RTP des trames du flux de données. En effet, ce champ correspond au profil des données encapsulées selon le protocole RTP et fournit une indication d'un type d'encodage utilisé pour la mise en forme des données transportées. Ainsi, le dispositif de communication 110 détermine si l'application repose sur une transmission en mode continu (« streaming » en anglais) de contenu vidéo, ou une transmission en mode continu de contenu audio, ou sur un autre genre de transmission via le réseau sans-fil 120.

Dans une étape 614 suivante, le dispositif de communication 110 définit les besoins en conditions de transmission, tels qu'utilisés dans l'étape 308, en fonction du type déterminé de l'application. Le dispositif de communication 110 tient alors compte de l'apparition du flux de données correspondant à l'application dont le type a été déterminé. Par exemple, jusqu'alors aucun flux de diffusion de contenu vidéo en mode continu ne transitait sur le réseau sans-fil 120.

Dans une étape 615 suivante, le dispositif de communication 110 détecte une disparition du flux de données. Par exemple, le dispositif de communication 110 détecte un événement interne indiquant que le flux de données n'est plus généré, n'est plus reçu, ou ne transite plus par le dispositif de communication 110, ou le dispositif de communication 110 reçoit un message via le réseau sans-fil 120 indiquant que le flux de données n'est plus généré, n'est plus reçu, ou ne transite plus par un autre dispositif de communication 111, 112.

Dans une étape 616 suivante, le dispositif de communication 110 le dispositif de communication 110 définit les besoins en conditions de transmission, tels qu'utilisés dans l'étape 308, en fonction du type déterminé de l'application. Le dispositif de communication 110 tient alors compte de la disparition du flux de données correspondant à l'application dont le type a été déterminé. Par exemple, dorénavant aucun flux de diffusion de contenu vidéo en mode continu ne transite sur le réseau sans-fil 120.

Ainsi, comme le montrent les algorithmes des Figs. 6A et 6B, le dispositif de communication 110 peut être adapté pour modifier dynamiquement le critère prédéfini permettant au dispositif de communication 110 de déterminer les besoins en conditions de transmission, c'est-à-dire si les perturbations observées sur le canal de communication sélectionné correspondent à des conditions de transmission satisfaisantes.

## Revendications

1. Dispositif de configuration (204) adapté pour configurer un dispositif de communication (110) destiné à être connecté à un réseau sans-fil (120) comportant un nombre N de canaux de communication, avec N ≥ 2, le dispositif de communication comprenant un module de communication radiofréquence (201) et étant adapté pour communiquer via un canal de communication à la fois, chaque communication du dispositif de communication utilisant ledit module de communication radiofréquence, le dispositif de configuration comportant des moyens de sélection (203) d'un canal parmi les N canaux de communication, **caractérisé en ce que** les moyens de sélection sont adaptés pour :
- activer une temporisation T2 dont la durée est représentative d'une durée estimée de stabilité des conditions de transmission sur les N canaux de transmission,
- sélectionner un canal de communication de niveau de perturbation inconnu, lorsque le niveau de perturbation d'au moins un canal de communication est inconnu du dispositif de configuration, et sinon sélectionner le canal de communication le moins perturbé ;
et **en ce que** le dispositif de configuration comporte :
- des moyens pour maintenir un canal de communication sélectionné pendant une période prédéterminée T1 pour chaque communication du dispositif de communication; et,
- des moyens pour analyser des perturbations sur le canal de communication sélectionné du dispositif de communication à expiration de la période prédéterminée T1, le critère prédéterminé étant calculé à partir d'au moins une information fournie par les moyens pour analyser des perturbations
des moyens de configuration dynamique (303) du dispositif de communication comprenant des moyens de réactivation (314) des moyens de sélection, en cas de perturbations représentatives de conditions de transmission non satisfaisantes selon un critère prédéterminé sur le canal de communication sélectionné ; et,
des moyens de désactivation (310) des moyens de configuration dynamique, lorsque les moyens de sélection ont été réactivés N fois et la temporisation T2 n'est pas écoulée.

2. Dispositif de configuration selon la revendication 1, **caractérisé en ce que** les moyens de configuration dynamique comportent des moyens d'analyse (305) de perturbations survenant sur le canal de communication sélectionné adaptés pour déterminer un type desdites perturbations, et **en ce que** ledit critère prédéterminé est fonction du type desdites perturbations.

3. Dispositif de configuration selon la revendication 2, **caractérisé en ce que** les moyens d'analyse sont adaptés pour déterminer au moins un type de perturbations parmi :
- un bruit bloquant (410), qui est de niveau supérieur à un premier seuil ;
- un bruit persistant (415), qui est présent au moins pendant une première durée prédéfinie;
- un bruit fortement persistant (413), qui est présent au moins pendant une seconde durée prédéfinie supérieure à la première durée prédéfinie ;
- un bruit répétitif (516), qui est un bruit apparaissant une pluralité de fois pendant une période prédéfinie.

4. Dispositif de configuration selon la revendication 3, **caractérisé en ce que** les moyens d'analyse comportent :
- des moyens de découpage (402, 403) d'une période totale d'analyse en une pluralité de périodes unitaires ;
- des moyens d'activation (407) d'un premier compteur, incrémenté à chaque fois que le niveau des perturbations dépasse un second seuil pendant une période unitaire ;
et **en ce que** les moyens d'analyse sont adaptés pour considérer les perturbations comme un bruit persistant lorsque le premier compteur est supérieur à un troisième seuil, une fois la période totale d'analyse écoulée.

5. Dispositif de configuration selon la revendication 4, **caractérisé en ce que** les moyens d'analyse sont adaptés pour considérer les perturbations comme un bruit fortement persistant lorsque le premier compteur est supérieur à un quatrième seuil, une fois la période totale d'analyse écoulée, ledit quatrième seuil étant supérieur audit troisième seuil.

6. Dispositif de configuration selon l'une quelconque des revendications 3 à 5, **caractérisé en ce que** les moyens d'analyse comportent :
- des moyens de découpage (502, 503) d'une période totale d'analyse en une pluralité de sous-périodes d'analyse ;
- des moyens d'activation (511) d'un second compteur, incrémenté à chaque fois qu'un type de perturbations prédéfini est détecté pendant une dite sous-période d'analyse ;
et **en ce que** les moyens d'analyse sont adaptés pour considérer les perturbations comme un bruit répétitif lorsque le second compteur est supérieur à un cinquième seuil, une fois la période totale d'analyse écoulée.

7. Dispositif de configuration selon l'une quelconque des revendications 2 à 6, **caractérisé en ce que** le critère prédéterminé est de plus fonction d'un type d'application communiquant via le réseau sans-fil.

8. Dispositif de configuration selon la revendication 7, **caractérisé en ce qu'**il comporte des moyens d'analyse protocolaire (612) de trames transitant par le dispositif de communication et des moyens de détermination (613) du type d'application en fonction d'un résultat de l'analyse protocolaire.

9. Dispositif de configuration selon l'une quelconque des revendications 1 à 8, **caractérisé en ce qu'**il est adapté pour suspendre (304) les moyens de configuration dynamique, après chaque réactivation des moyens de sélection, jusqu'à expiration d'une durée estimée de stabilisation de reconfiguration de dispositifs de communication du réseau sans-fil suite à un changement de canal de communication.

10. Dispositif de configuration selon l'une quelconque des revendications 1 à 9, **caractérisé en ce qu'**il est inclus dans le dispositif de communication.

11. Dispositif de configuration selon l'une quelconque des revendications 1 à 10, **caractérisé en ce que** le dispositif de communication est un point d'accès Wi-Fi.

12. Procédé mis en oeuvre par un dispositif de configuration (204) d'un dispositif de communication (110) connecté à un réseau sans-fil (120) comportant un nombre N de canaux de communication, avec N ≥ 2, le dispositif de communication comprenant un module de communication radiofréquence (201) et étant adapté pour communiquer via un canal de communication à la fois, chaque communication du dispositif de communication utilisant ledit module de communication radiofréquence, le dispositif de configuration comportant des moyens de sélection (203) d'un canal parmi les N canaux de communication, **caractérisé en ce que** les moyens de sélection sont adaptés pour :
- activer une temporisation T2 dont la durée est représentative d'une durée estimée de stabilité des conditions de transmission sur les N canaux de transmission
- sélectionner un canal de communication de niveau de perturbation inconnu, lorsque le niveau de perturbation d'au moins un canal de communication est inconnu du dispositif de configuration ; et sinon sélectionner le canal de communication le moins perturbé ;
et, **en ce que** le dispositif de configuration comporte :
- des moyens pour maintenir un canal de communication sélectionné pendant une période prédéterminée T1 pour chaque communication du dispositif de communication; et,
- des moyens pour analyser des perturbations sur le canal de communication sélectionné du dispositif de communication à expiration de la période prédéterminée T1, le critère prédéterminé étant calculé à partir d'au moins une information fournie par les moyens pour analyser des perturbations ;
- des moyens de configuration dynamique (303) du dispositif de communication comprenant des moyens de réactivation (314) des moyens de sélection, en cas de perturbations représentatives de conditions de transmission non satisfaisantes selon un critère prédéterminé sur le canal de communication sélectionné ;et **en ce que** le procédé comporte une étape de désactivation (310) des moyens de configuration dynamique, lorsque les moyens de sélection ont été réactivés N fois et la temporisation T2 n'est pas écoulée.

13. Programme d'ordinateur, **caractérisé en ce qu'**il comprend des instructions pour mettre en oeuvre, par un dispositif (204), le procédé selon la revendication 12, lorsque ledit programme est exécuté par un processeur.

14. Moyens de stockage, **caractérisés en ce qu'**ils stockent un programme d'ordinateur comprenant des instructions pour mettre en oeuvre, par un dispositif (204), le procédé selon la revendication 12, lorsque ledit programme est exécuté par un processeur.

## Patentansprüche

1. Konfigurationsvorrichtung (204), welche dafür ausgelegt ist, eine Kommunikationsvorrichtung (110) zu konfigurieren, die dazu bestimmt ist, mit einem drahtlosen Netz (120) verbunden zu werden, das eine Anzahl N von Kommunikationskanälen mit N ≥ 2 aufweist, wobei die Kommunikationsvorrichtung ein Hochfrequenz-Kommunikationsmodul (201) umfasst und dafür ausgelegt ist, immer nur über jeweils einen Kommunikationskanal zu kommunizieren, wobei für jede Kommunikation der Kommunikationsvorrichtung das Hochfrequenz-Kommunikationsmodul verwendet wird, wobei die Konfigurationsvorrichtung Mittel zur Auswahl (203) eines Kanals aus den N Kommunikationskanälen aufweist, **dadurch gekennzeichnet, dass** die Auswahlmittel ausgelegt sind zum:
- Aktivieren einer Verzögerung T2, deren Dauer für eine geschätzte Dauer der Stabilität der Übertragungsbedingungen auf den N Übertragungskanälen repräsentativ ist,
- Auswählen eines Kommunikationskanals mit unbekanntem Störpegel, wenn der Konfigurationsvorrichtung der Störpegel wenigstens eines Kommunikationskanals unbekannt ist, und andernfalls Auswählen des am wenigsten gestörten Kommunikationskanals;
und dadurch, dass die Konfigurationsvorrichtung aufweist:
- Mittel zum Beibehalten eines ausgewählten Kommunikationskanals während eines vorbestimmten Zeitraums T1 für jede Kommunikation der Kommunikationsvorrichtung; und
- Mittel zum Analysieren der Störungen auf dem ausgewählten Kommunikationskanal der Kommunikationsvorrichtung nach Ablauf des vorbestimmten Zeitraums T1, wobei das vorbestimmte Kriterium aus wenigstens einer von den Mitteln zum Analysieren der Störungen gelieferten Information berechnet wird;
Mittel zur dynamischen Konfiguration (303) der Kommunikationsvorrichtung, welche Mittel zur Reaktivierung (314) der Auswahlmittel im Falle von Störungen, die für gemäß einem vorbestimmten Kriterium nicht zufriedenstellende Übertragungsbedingungen auf dem ausgewählten Kommunikationskanal repräsentativ sind, umfassen; und
Mittel zur Deaktivierung (310) der Mittel zur dynamischen Konfiguration, wenn die Auswahlmittel N mal reaktiviert worden sind und die Verzögerung T2 nicht abgelaufen ist.

2. Konfigurationsvorrichtung nach Anspruch 1, **dadurch gekennzeichnet, dass** die Mittel zur dynamischen Konfiguration Mittel zur Analyse (305) von auf dem ausgewählten Kommunikationskanal auftretenden Störungen aufweisen, die dafür ausgelegt sind, einen Typ dieser Störungen zu bestimmen, und dadurch, dass das vorbestimmte Kriterium vom Typ der Störungen abhängig ist.

3. Konfigurationsvorrichtung nach Anspruch 2, **dadurch gekennzeichnet, dass** die Analysemittel dafür ausgelegt sind, wenigstens einen Typ von Störungen zu bestimmen aus:
- einem blockierenden Geräusch (410), welches einen Pegel aufweist, der höher als ein erster Schwellenwert ist;
- einem anhaltenden Geräusch (415), welches wenigstens während einer ersten vordefinierten Dauer vorhanden ist;
- einem lange anhaltenden Geräusch (413), welches wenigstens während einer zweiten vordefinierten Dauer vorhanden ist, die länger als die erste vordefinierte Dauer ist;
- einem sich wiederholenden Geräusch (516), welches ein Geräusch ist, das während einer vordefinierten Dauer mehrere Male auftritt.

4. Konfigurationsvorrichtung nach Anspruch 3, **dadurch gekennzeichnet, dass** die Analysemittel aufweisen:
- Mittel zur Zerlegung (402, 403) eines Gesamtanalysezeitraums in mehrere Einheitszeiträume;
- Mittel zur Aktivierung (407) eines ersten Zählers, der jedes Mal inkrementiert wird, wenn der Pegel der Störungen während eines Einheitszeitraums einen zweiten Schwellenwert überschreitet;
und dadurch, dass die Analysemittel dafür ausgelegt sind, die Störungen als ein anhaltendes Geräusch zu betrachten, wenn der erste Zähler höher als ein dritter Schwellenwert ist, nachdem der Gesamtanalysezeitraum abgelaufen ist.

5. Konfigurationsvorrichtung nach Anspruch 4, **dadurch gekennzeichnet, dass** die Analysemittel dafür ausgelegt sind, die Störungen als ein lange anhaltendes Geräusch zu betrachten, wenn der erste Zähler höher als ein vierter Schwellenwert ist, nachdem der Gesamtanalysezeitraum abgelaufen ist, wobei der vierte Schwellenwert höher als der dritte Schwellenwert ist.

6. Konfigurationsvorrichtung nach einem der Ansprüche 3 bis 5, **dadurch gekennzeichnet, dass** die Analysemittel aufweisen:
- Mittel zur Zerlegung (502, 503) eines Gesamtanalysezeitraums in mehrere Teil-Analysezeiträume;
- Mittel zur Aktivierung (511) eines zweiten Zählers, der jedes Mal inkrementiert wird, wenn ein vordefinierter Typ von Störungen während eines Teil-Analysezeitraums erkannt wird;
und dadurch, dass die Analysemittel dafür ausgelegt sind, die Störungen als ein sich wiederholendes Geräusch zu betrachten, wenn der zweite Zähler höher als ein fünfter Schwellenwert ist, nachdem der Gesamtanalysezeitraum abgelaufen ist.

7. Konfigurationsvorrichtung nach einem der Ansprüche 2 bis 6, **dadurch gekennzeichnet, dass** das vorbestimmte Kriterium außerdem von einem Typ einer Anwendung abhängig ist, die über das drahtlose Netz kommuniziert.

8. Konfigurationsvorrichtung nach Anspruch 7, **dadurch gekennzeichnet, dass** sie Mittel zur Protokollanalyse (612) von Rahmen, die über die Kommunikationsvorrichtung übertragen werden, und Mittel zur Bestimmung (613) des Anwendungstyps in Abhängigkeit von einem Ergebnis der Protokollanalyse aufweist.

9. Konfigurationsvorrichtung nach einem der Ansprüche 1 bis 8, **dadurch gekennzeichnet, dass** sie dafür ausgelegt ist, den Betrieb der Mittel zur dynamischen Konfiguration nach jeder Reaktivierung der Auswahlmittel bis zum Ablauf einer geschätzten Stabilisierungsdauer für die Rekonfiguration von Kommunikationsvorrichtungen des drahtlosen Netzes im Anschluss an einen Wechsel des Kommunikationskanals zu unterbrechen (304).

10. Konfigurationsvorrichtung nach einem der Ansprüche 1 bis 9, **dadurch gekennzeichnet, dass** sie in der Kommunikationsvorrichtung enthalten ist.

11. Konfigurationsvorrichtung nach einem der Ansprüche 1 bis 10, **dadurch gekennzeichnet, dass** die Kommunikationsvorrichtung ein Wi-Fi-Zugangspunkt ist.

12. Verfahren, welches von einer Konfigurationsvorrichtung (204) einer Kommunikationsvorrichtung (110) durchgeführt wird, die mit einem drahtlosen Netz (120) verbunden ist, das eine Anzahl N von Kommunikationskanälen mit N ≥ 2 aufweist, wobei die Kommunikationsvorrichtung ein Hochfrequenz-Kommunikationsmodul (201) umfasst und dafür ausgelegt ist, immer nur über jeweils einen Kommunikationskanal zu kommunizieren, wobei für jede Kommunikation der Kommunikationsvorrichtung das Hochfrequenz-Kommunikationsmodul verwendet wird, wobei die Konfigurationsvorrichtung Mittel zur Auswahl (203) eines Kanals aus den N Kommunikationskanälen aufweist, **dadurch gekennzeichnet, dass** die Auswahlmittel ausgelegt sind zum:
- Aktivieren einer Verzögerung T2, deren Dauer für eine geschätzte Dauer der Stabilität der Übertragungsbedingungen auf den N Übertragungskanälen repräsentativ ist,
- Auswählen eines Kommunikationskanals mit unbekanntem Störpegel, wenn der Konfigurationsvorrichtung der Störpegel wenigstens eines Kommunikationskanals unbekannt ist; und andernfalls Auswählen des am wenigsten gestörten Kommunikationskanals;
und dadurch, dass die Konfigurationsvorrichtung aufweist:
- Mittel zum Beibehalten eines ausgewählten Kommunikationskanals während eines vorbestimmten Zeitraums T1 für jede Kommunikation der Kommunikationsvorrichtung; und
- Mittel zum Analysieren der Störungen auf dem ausgewählten Kommunikationskanal der Kommunikationsvorrichtung nach Ablauf des vorbestimmten Zeitraums T1, wobei das vorbestimmte Kriterium aus wenigstens einer von den Mitteln zum Analysieren der Störungen gelieferten Information berechnet wird;
- Mittel zur dynamischen Konfiguration (303) der Kommunikationsvorrichtung, welche Mittel zur Reaktivierung (314) der Auswahlmittel im Falle von Störungen, die für gemäß einem vorbestimmten Kriterium nicht zufriedenstellende Übertragungsbedingungen auf dem ausgewählten Kommunikationskanal repräsentativ sind, umfassen; und dadurch, dass das Verfahren einen Schritt der Deaktivierung (310) der Mittel zur dynamischen Konfiguration, wenn die Auswahlmittel N mal reaktiviert worden sind und die Verzögerung T2 nicht abgelaufen ist, aufweist.

13. Computerprogramm, **dadurch gekennzeichnet, dass** es Anweisungen zur Durchführung des Verfahrens nach Anspruch 12 durch eine Vorrichtung (204), wenn das Programm von einem Prozessor ausgeführt wird, umfasst.

14. Speichermittel, **dadurch gekennzeichnet, dass** sie ein Computerprogramm speichern, welches Anweisungen zur Durchführung des Verfahrens nach Anspruch 12 durch eine Vorrichtung (204), wenn das Programm von einem Prozessor ausgeführt wird, umfasst.

## Claims

1. Configuration device (204) adapted to configure a communication device (110) intended to be connected to a wireless network (120) comprising a number N of communication channels, with N ≥ 2, the communication device comprising a radiofrequency communication module (201) and being adapted to communicate via one communication channel at a time, each communication of the communication device using said radiofrequency communication module, the configuration device comprising selection means (203) for selecting a channel from among the N communication channels, **characterized in that** the selection means are adapted to:
- activate a timeout T2 whose duration is representative of an estimated duration of stability of the transmission conditions on the N transmission channels,
- select a communication channel of unknown disturbance level, when the disturbance level of at least one communication channel is unknown to the configuration device, and otherwise select the least disturbed communication channel;
and **in that** the configuration device comprises:
- means for keeping a communication channel selected for a predetermined period T1 for each communication of the communication device; and,
- means for analysing disturbances on the selected communication channel of the communication device on expiry of the predetermined period T1, the predetermined criterion being calculated on the basis of at least one item of information provided by the means for analysing disturbances
means of dynamic configuration (303) of the communication device comprising reactivation means (314) for reactivating the selection means, in case of disturbances representative of transmission conditions which are unsatisfactory according to a predetermined criterion on the selected communication channel; and,
deactivation means (310) for deactivating the means of dynamic configuration, when the selection means have been reactivated N times and the timeout T2 has not elapsed.

2. Configuration device according to Claim 1, **characterized in that** the means of dynamic configuration comprise analysis means (305) for analysing disturbances arising on the selected communication channel and adapted to determine a type of said disturbances, and **in that** said predetermined criterion is dependent on the type of said disturbances.

3. Configuration device according to Claim 2, **characterized in that** the analysis means are adapted to determine at least one type of disturbances from among:
- a blocking noise (410), which is of greater level than a first threshold;
- a persistent noise (415), which is present at least for a first predefined duration;
- a highly persistent noise (413), which is present at least for a second predefined duration greater than the first predefined duration;
- a repetitive noise (516), which is a noise appearing a plurality of times during a predefined period.

4. Configuration device according to Claim 3, **characterized in that** the analysis means comprise:
- means (402, 403) for cutting a total analysis period into a plurality of unitary periods;
- activation means (407) for activating a first counter, incremented each time the level of the disturbances exceeds a second threshold during a unitary period;
and **in that** the analysis means are adapted to consider the disturbances as a persistent noise when the first counter is greater than a third threshold, once the total analysis period has elapsed.

5. Configuration device according to Claim 4, **characterized in that** the analysis means are adapted to consider the disturbances as a highly persistent noise when the first counter is greater than a fourth threshold, once the total analysis period has elapsed, said fourth threshold being greater than said third threshold.

6. Configuration device according to any one of Claims 3 to 5, **characterized in that** the analysis means comprise:
- means (502, 503) for cutting a total analysis period into a plurality of analysis sub-periods;
- activation means (511) for activating a second counter, incremented each time a predefined type of disturbances is detected during a said analysis sub-period;
and **in that** the analysis means are adapted to consider the disturbances as a repetitive noise when the second counter is greater than a fifth threshold, once the total analysis period has elapsed.

7. Configuration device according to any one of Claims 2 to 6, **characterized in that** the predetermined criterion is moreover dependent on a type of application communicating via the wireless network.

8. Configuration device according to Claim 7, **characterized in that** it comprises means of protocol analysis (612) of frames travelling through the communication device and determination means (613) for determining the type of application as a function of a result of the protocol analysis.

9. Configuration device according to any one of Claims 1 to 8, **characterized in that** it is adapted to suspend (304) the means of dynamic configuration, after each reactivation of the selection means, until expiry of an estimated duration of stabilization of reconfiguration of communication devices of the wireless network subsequent to a change of communication channel.

10. Configuration device according to any one of Claims 1 to 9, **characterized in that** it is included in the communication device.

11. Configuration device according to any one of Claims 1 to 10, **characterized in that** the communication device is a Wi-Fi access point.

12. Method implemented by a configuration device (204) of a communication device (110) connected to a wireless network (120) comprising a number N of communication channels, with N ≥ 2, the communication device comprising a radio frequency communication module (201) and being adapted to communicate via one communication channel at a time, each communication of the communication device using said radiofrequency communication module, the configuration device comprising selection means (203) for selecting a channel from among the N communication channels, **characterized in that** the selection means are adapted to:
- activate a timeout T2 whose duration is representative of an estimated duration of stability of the transmission conditions on the N transmission channels,
- select a communication channel of unknown disturbance level, when the disturbance level of at least one communication channel is unknown to the configuration device, and otherwise select the least disturbed communication channel;
and **in that** the configuration device comprises:
- means for keeping a communication channel selected for a predetermined period T1 for each communication of the communication device; and,
- means for analysing disturbances on the selected communication channel of the communication device on expiry of the predetermined period T1, the predetermined criterion being calculated on the basis of at least one item of information provided by the means for analysing disturbances;
- means of dynamic configuration (303) of the communication device comprising reactivation means (314) for reactivating the selection means, in case of disturbances representative of transmission conditions which are unsatisfactory according to a predetermined criterion on the selected communication channel; and **in that** the method comprises a step (310) of deactivating the means of dynamic configuration, when the selection means have been reactivated N times and the timeout T2 has not elapsed.

13. Computer program, **characterized in that** it comprises instructions for implementing, by a device (204), the method according to Claim 12, when said program is executed by a processor.

14. Storage means, **characterized in that** they store a computer program comprising instructions for implementing, by a device (204), the method according to Claim 12, when said program is executed by a processor.
